Europäisches Patentamt

European Patent Office

Office européen des brevets

(11) Publication number: **0 385 776**
**A1**

## (12) EUROPEAN PATENT APPLICATION

(21) Application number: **90302190.5**

(22) Date of filing: **01.03.90**

(51) Int. Cl.5: **B62D 53/06**

(30) Priority: **01.03.89 GB 8904633**

(43) Date of publication of application:
**05.09.90 Bulletin 90/36**

(84) Designated Contracting States:
**BE DE ES FR GB IT NL**

(71) Applicant: **Stead, Brian**
**236 Victoria Road West**
**Cleveleys, Blackpool FY5 3QB(GB)**

(72) Inventor: **Stead, Brian**
**236 Victoria Road West**
**Cleveleys, Blackpool FY5 3QB(GB)**

(74) Representative: **Skerrett, John Norton Haigh**
**et al**
**H.N. & W.S. Skerrett Charles House 148/9**
**Great Charles Street**
**Birmingham B3 3HT(GB)**

(54) Heavy goods vehicle trailers.

(57) In a trailer of an articulated road transport heavy goods vehicle the forward end includes a cross-member (116;114;66a) forming part of a load-bearing structure adapted to overlie and couple to a part of the towing tractor unit (19) of the vehicle. The cross-member is integrally connected to one or more longitudinally-extending rigid spine members (50;50';50a) projecting upwardly above the cargo-carrying deck or floor (18;118;68a) of the trailer in a central region thereof, such spine member or members being effective to stiffen the load-bearing structure thereby permitting the depth of that part of the load-bearing structure which lies below the level of the top of the cargo-carrying deck or floor (18;118;68a) at the forward end of the trailer to be less than would otherwise be necessary to achieve a satisfactory level of load-bearing characteristics during use.

FIG.7.

EP 0 385 776 A1

## HEAVY GOODS VEHICLE TRAILERS

The present invention relates to road transport heavy goods vehicles, and it particularly concerns articulated goods vehicles in which a towing tractor unit couples to, and supports, the forward end of a cargo-carrying trailer (sometimes termed a "semi-trailer") through a load bearing structure of the latter that overlies the rear of the tractor unit.

Background

The trailers of such articulated goods vehicles are commonly "van type" trailers having a cargo-carrying deck or floor above which is supported an overhead roof frame structure, and in one widely-used type of construction the deck or floor is supported from beneath by a chassis that includes spaced-apart longitudinal main frame members interconnected at their forward ends by at least one cross member providing a load-bearing structure adapted to seat upon and to be coupled by way of a king-pin connector to the tractor unit when in use. This type of construction is generally used for open-sided van-type trailer bodies, such as T.I.R. 'Tilt' trailers and curtainsided trailers, designed for easy unobstructed side loading and unloading of cargo by fork-lift trucks, but it is also applied to some other types such as, for example, refrigerated vans in which the floor or deck is usually a relatively deep double-skin insulated structure.

In another type of construction commonly used for so-called dry freight vans which have rigid closed bodies with a load-bearing floor and side walls, a separate chassis is dispensed with but there is usually still a load-bearing structure including a rigid frame cross-member or cross-members at the forward end for seating on and coupling via a king pin to the tractor unit.

At the present time heavy goods road transport vehicles are subject by law to certain size restrictions. Thus, in the United Kingdom there is a maximum overall legal width of 2.5 metres (8'2$\frac{1}{2}$ ") and for vehicles operating at more than 32 tonnes gross weight the overall height is limited to 4.2 metres (4.0 metres in most Continental European countries).

These restrictions, particularly the overall height restriction, have created a problem in designing the structure of van-type trailers such as to make available the maximum height for accommodating the payload and to give the maximum useful cargo transport (cube) volume. The problem is most acute at the forward end of the trailer since the body in this region must generally overlie and be supported by the rear end of the tractor unit during use so that the maximum height available in the cargo space above the floor or deck in this region is limited by the depth between the top of the floor or deck and the underside of the load-bearing structure that seats on the tractor unit.

For this reason, in the chassis-type constructions referred to, it has been a usual practice to reduce the depth of the forward end portions of the longitudinal main frame members of the chassis, thereby providing so-called "neck" regions of the latter. These longitudinal main frame members themselves are usually in the form of "I" section beams, extending beneath the deck.

Although the forwardly necked design of these chassis frame members has been of some assistance in increasing the maximum useful cargo space and in reducing the effect of the overall height limitation, with conventional structural designs wherein the chassis and load-bearing structure is wholly beneath the level of the deck it is found in practice that the minimum depth of the forward necked region of the longitudinal frame members, even without the thickness of the deck, cannot generally be less than about 12.5 to 15cms (5 to 6 inches) for curtain-sided and so-called T.I.R. Tilt" trailers, otherwise the neck portions of these frame members will lack sufficient stiffness and will be subjected to unacceptably high levels of deflection in use unless the overall width of these members is increased to such an extent that there is a serious increase in unladen weight. Moreover, in refrigerated van-type trailers with the above-mentioned chassis construction, wherein the deck is a double skin insulated structure, the minimum depth, as measured between the top of the deck and the underside of the neck portions of these chassis frame members, necessary to obtain adequate strength and stiffness is likely to be at least about 20cms (8 inches) unless a more complex so-called "Slimline" arrangement is adopted in which the deck structure is recessed on its underside to accommodate the top part of the chassis frame members, in which case it may be possible to reduce the depth to about 15cms (6 inches).

Even in chassisless dry freight van-type trailers, with conventional constructions, to preserve sufficient strength and stiffness in the forward load-bearing structure which includes the floor and cross-member frame it is still not usually possible to reduce the depth below about 6.4cms (2.5 inches), and although the problem is not so serious as with the chassis-type constructions there is still scope for improvement.

## Summary of the invention

In respect of this problem of maximizing the available cargo space, notwithstanding a given overall height limitation, a trailer of an articulated road transport heavy goods vehicle having a load bearing structure at the forward end which overlies and couples to complementary connecting means of the tractor unit, the present invention seeks a solution by providing one or more longitudinally extending rigid spine members projecting upwardly above the top of the cargo-carrying deck or floor of the trailer, such spine member or members being incorporated as an integral part of the load-bearing structure and being effective to stiffen the latter, thereby permitting the depth of that part of the load-bearing structure which lies below the level of the top of the cargo carrying deck or floor at the forward end of the trailer to be less than would otherwise be necessary to achieve a satisfactory level of load-bearing characteristics during use.

In carrying out the invention, such spine member or members is or are preferably positioned substantially midway across the width of the cargo-carrying deck or floor, usually being confined to a relatively narrow central region and being arranged symmetrically with respect to the median longitudinal axis of the trailer so that there is minimal loss of cargo space across the width of the deck or floor. Indeed, in many cases the width of this central region need be no more than about 50mm (2 inches) so that with a floor or deck having an overall width equal to the present standard legal maximum trailer width of 2.5 metres, there still remains sufficient space to accommodate a standard 1200mm (48 inch) pallet each side of the spine member or members providing such central spine structure and no useful cargo space need be lost at all.

In general, the height to which the spine member or members may rise is not critical and may even be as great as 2.4 metres (about 8 feet). However, usually a height of about 60 to 90cms (2 to 3 feet), or even less, will be sufficient to provide the required load-bearing capacity and resistance to vertical deflection needed to permit a significant reduction in depth of the part of the load-bearing structure lying below the level of the top of the cargo-carrying floor or deck.

The spine member or each spine member will usually be arranged to continue rearwardly along the length of the trailer for a short distance which is at least equal to the length of the forward part of the trailer that, in use, overlies part of the towing tractor unit and which, in the case of a chassis type construction of the kind referred to, enables such member or members to be satisfactorily joined back to the main rails or longitudinal frame members of the chassis structure.

The use of the upstanding central spine member or members with the chassis type construction may supplement the load-bearing capacity of the forward necked regions of the longitudinal main frame members so that the depth of these regions can be substantially reduced, or it may even replace them, that is to say the longitudinal main frame members may be designed to terminate short of the forward portion which overlies part of the tractor unit, generally at a point adjacent the usual landing legs provided for supporting the trailer when uncoupled from the tractor, so that in this instance the forward neck portions are eliminated completely.

In any event, it is believed that the use of an upstanding spine structure as hereinbefore described will enable the overall depth of the load bearing structure below the level of the top of the cargo-carrying floor or deck at the forward end of the trailer to be reduced in all cases to at least 10cms (4 inches), and probably to 5cms (2 inches) or less, thereby increasing the usable height and cube volume of the cargo space accordingly.

By way of example, the invention will be further described with reference to the accompanying diagrammatic drawings, in which:

FIGURE 1 is a side elevational view of a typical conventional curtain-sided chassis type trailer of an articulated road transport heavy goods vehicle;

FIGURE 2 is a further view on a larger scale of part of the body of the trailer shown in FIGURE 1;

FIGURE 3 is a side elevational view of a typical chassis main rail or longitudinal frame member, partly broken away, as usually used in the trailers of the kind illustrated in FIGURES 1 and 2, showing a reduced depth neck portion at the forward end, and

FIGURES 3a and 3b are cross-sectional views on lines A-A and B-B respectively of FIGURE 3;

FIGURE 4 is a transverse cross-sectional view on line IV-IV of FIGURE 2;

FIGURES 5a and 5b are views similar to FIGURE 3 showing the effect of using a chassis main rail with a slim neck having insufficient load bearing capacity and stiffness to resist deflection;

FIGURE 6 is a view similar to FIGURE 2 but with the trailer embodying a spine structure in accordance with the present invention;

FIGURE 7 is a transverse cross-sectional view on a larger scale along line VII-VII of FIGURE 6;

FIGURE 8 is a cross-sectional view similar to FIGURE 4 where the trailer is a conventional refrigerated van-type trailer with a double-skin insulated floor resting on the chassis;

FIGURE 9 is similar to FIGURE 8 but shows a known so-called "Slimline" floor construction of a refrigerated van-type trailer;

FIGURE 10 is again a cross-sectional view similar to FIGURES 8 and 9 through the forward end of the floor structure of a refrigerated van-type trailer but showing how the structure can be modified and the depth reduced by incorporating an upstanding load-bearing central spine in accordance with the invention;

FIGURE 11 is a side elevational view of a typical chassis-less dry freight van trailer;

FIGURE 12 is a cross-sectional view on a larger scale on line XII-XII of FIGURE 11 showing the conventional form of floor construction and load-bearing structure of dry freight van trailers at the forward end; and

FIGURE 13 is a view similar to FIGURE 12 but again showing how the structure can be modified and the depth reduced by incorporating an upstanding load-bearing central spine in accordance with the invention.

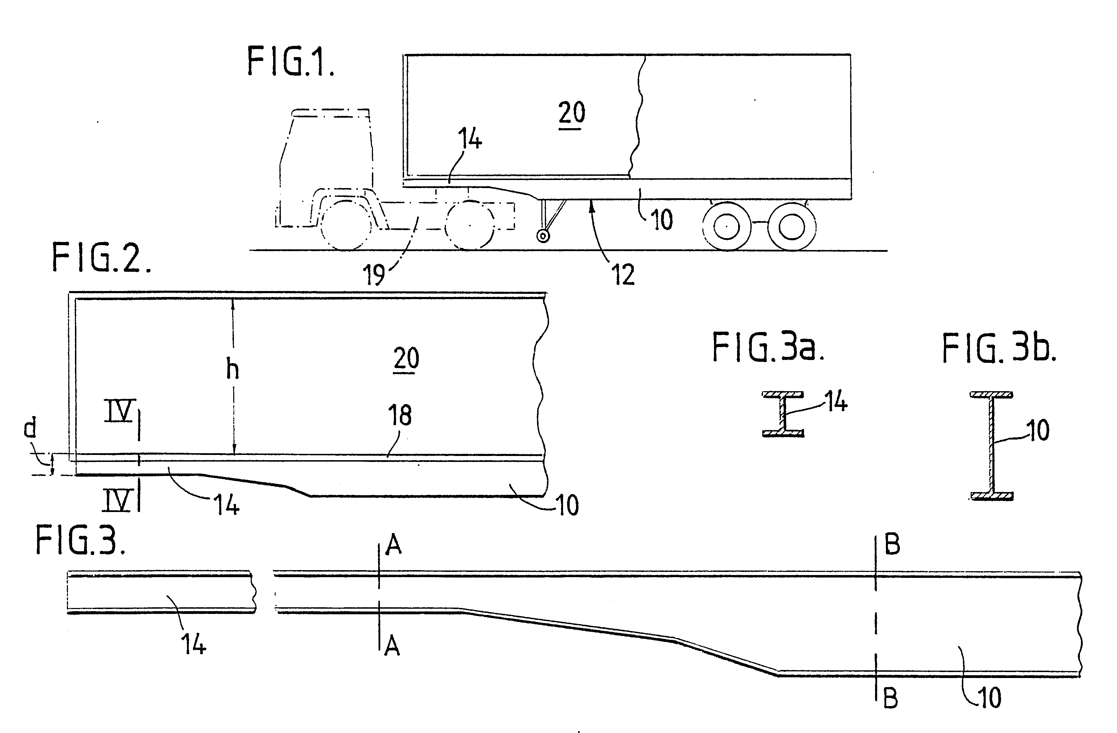

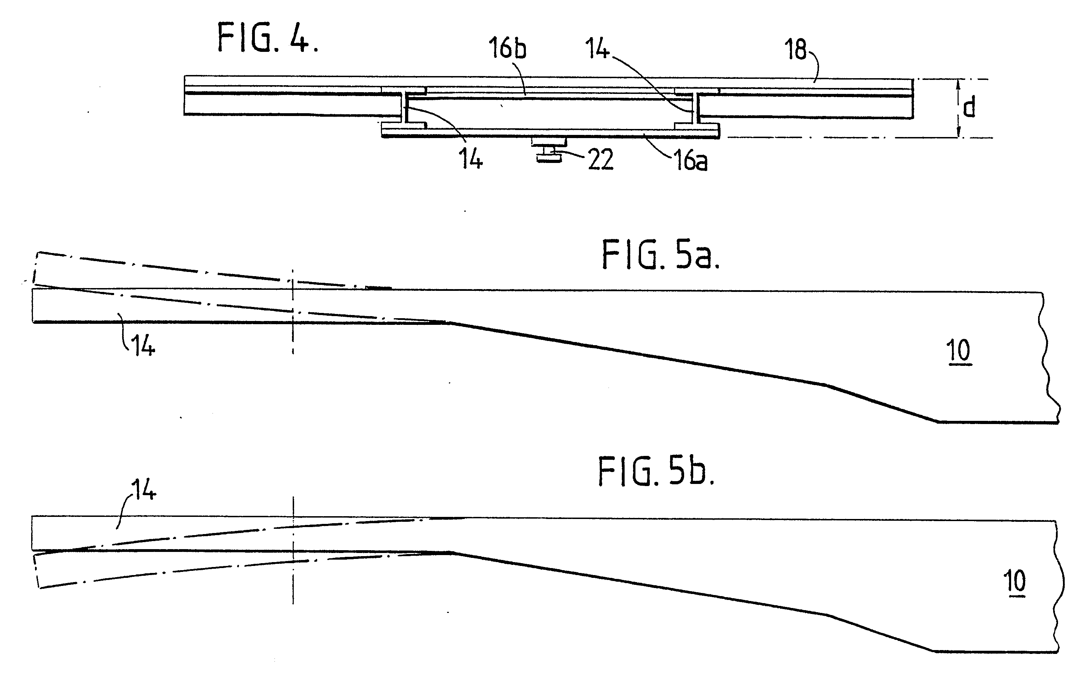

Referring to the drawings, the illustrations in FIGURES 1 to 4 of the conventional prior art construction of curtain-sided open bodied van-type trailers of articulated heavy goods vehicles clearly show the manner in which spaced-apart I-beam section longitudinal main frame members or main rails 10 of a chassis 12 have their forward ends formed of a reduced depth to provide neck portions 14 that are connected by cross-members 16a, 16b, (see FIGURE 4) to provide below the level of the floor or deck 18 a load bearing structure adapted to carry a king-pin joint 22, or the like, for coupling to the towing tractor of the vehicle (shown at 19 in broken lines in FIGURE 1) and to support the forward end of the trailer body 20 during use. The overall depth of this load-bearing structure as measured between the underside and the top of the floor or deck 18 is indicated by the dimension $d$ marked in FIGURE 4, and the maximum height of the usable cargo transport or cube space within the body is indicated by the dimension marked $h$ in FIGURE 2. Thus, it will be appreciated that overall height of the trailer for a given tractor unit is essentially determined by the sum of the dimensions $d$ and $h$ so that in order for $h$ to have a maximum value dimension $d$ must be reduced to a minimum value.

Whilst the reduced depth neck portions 14 of the chassis main beams are certainly helpful for enabling the floor or deck 18 to lie at a lower level at the forward end of the trailer above the rear of the tractor unit 19, thereby enabling a larger value of the interior height dimension $h$ to be achieved within the applicable overall height limitation, if the depth of the neck portions 14 is reduced to such an extent that the dimension $d$ is less than about 15cms (6 inches) problems are generally encountered arising from the accompanying reduction in load bearing strength and in resistance to deflection. As illustrated in FIGURE 5a, when in use and fully laden this can cause the front portion of the chassis behind the tractor unit to sag such that there is a relative deflection in an upwards direction of the neck portions which are supported on he tractor unit. Similarly, when the laden trailer is uncoupled from the tractor unit and supported by its landing legs, the neck portions 14 may deflect downwards as illustrated in FIGURE 5b. Such deflections or bowing can be very inconvenient and may produce jamming or buckling of the bodywork, especially with dropside bodies, and may also cause problems in recoupling a laden uncoupled trailer to its tractor unit.

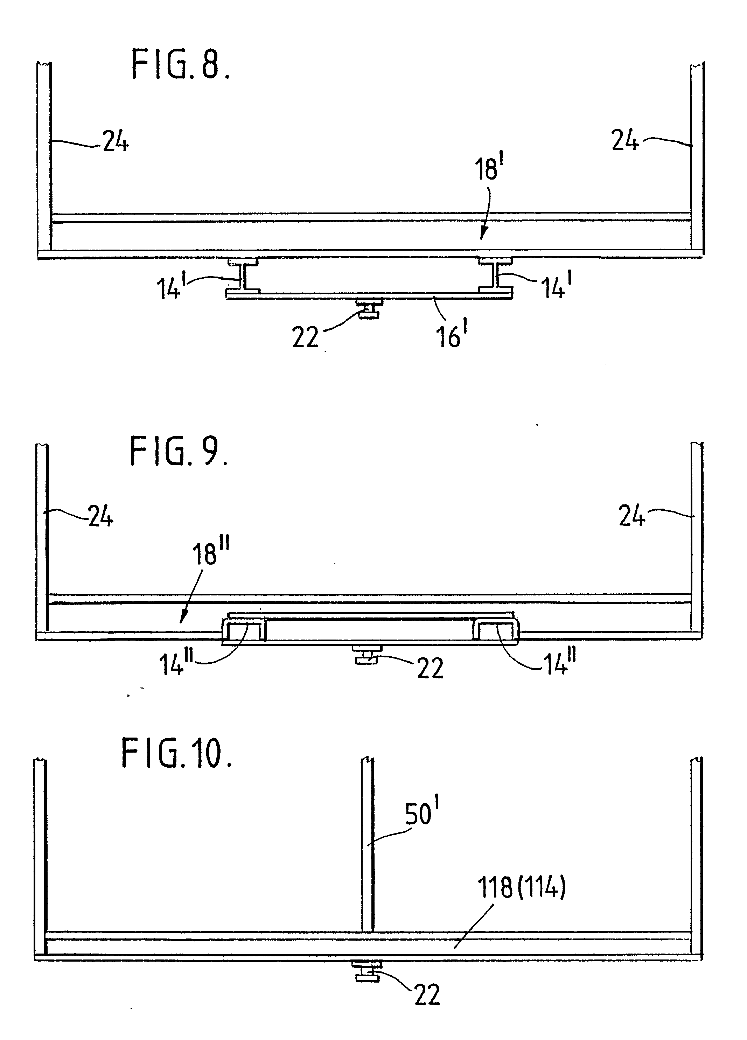

The situation is similar in refrigerated van-type trailers where the floor or deck typically has an insulated double-skin construction as indicated at 18' in FIGURE 8 which again is supported at the front by reduced depth neck portions 14' of the chassis main rails interconnected by a cross member 16' carrying a king-pin connector 22 for coupling to the tractor unit. In this case, even although rigid side walls 24,24, may contribute some load-bearing strength and enable the depth of the neck portions 14' to be less than with the open bodies of the curtainsided trailers, in practice the increased depth of the floor structure results in there being a limit of about 20cms (8 inches) for the overall depth between the top surface of the floor structure and the underside of the cross-member 16'.

Attempts to reduce this depth further in refrigerated van-type trailers have been made by recessing the underside of the floor structure as shown at 18" in FIGURE 9 so as to accommodate at least part of the neck portions of the chassis main rails, here shown as being of inverted channel-section and indicated by reference 14". Even with this "Slimline" modification, however, although the cross-member 16' can be brought substantially flush with the underside of the floor structure 18", the minimum satisfactory value for the depth dimension $d$ is still of the order of 15cms (6 inches).

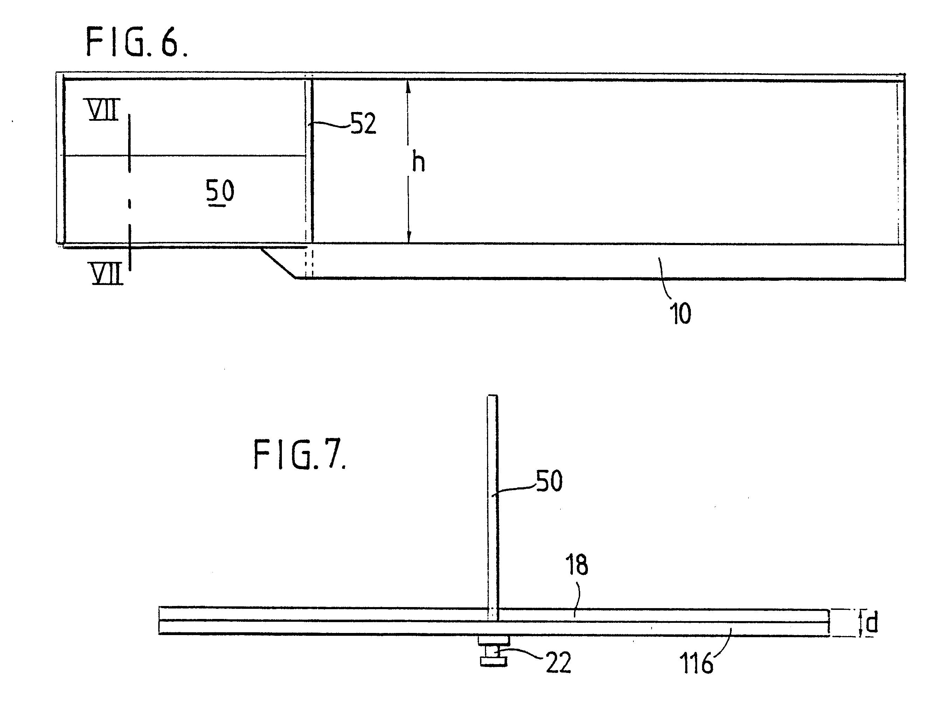

In applying the present invention to an open bodied van-type trailer of the form illustrated in FIGURES 1 to 4, as shown in FIGURES 6 and 7 the cross-member carrying the king-pin connector 22, here denoted by reference 116, is provided with a slim but rigid centrally-disposed spine member 50 which projects upwardly above the top of the floor or deck 18 for a distance of several feet in this particular example. The spine member 50 in this embodiment is in the form of a substantially rectangular plate having a width of about 5cms (2 inches) and it extends rearwardly along the median longitudinal axis of the trailer up to a point adjacent the normal position of the landing legs structure, at which point it may be connected by further cross-members (not shown) to the main rail sections of the longitudinal frame members 10 of the chassis. A vertical post support 52 extending up to the roof structure may also be provided at this rear end of the spine member 50.

This spine member 50 may be welded or otherwise rigidly connected to the cross-member 116 and forms an integral part of the load-bearing structure at the front of the trailer, resisting vertical deflection and adding stiffness. As a result, the depth of the forward neck portions of the main rail sections of the chassis may be further reduced or, as indicated in FIGURES 6 and 7, they may be substantially eliminated altogether, in either case enabling a useful increase in the internal height dimension h to be obtained.

Instead of a single spine member 50 being provided as illustrated, if desired two or more rigid plate-like spine members may be provided in parallel side-by-side relationship, but preferably the overall width of the central region containing the spine member or members will not exceed about 5cms (2 inches) in order to avoid loss of cargo space, especially when loading standard 1200mm pallets, as already mentioned.

As shown in FIGURE 10, the invention may be applied in an exactly similar way to a refrigerated van-type trailer, with a similar rigid upstanding plate-like spine member 50' being welded or otherwise rigidly connected to the double-skinned floor structure 118 and/or cross member 114 of the load-bearing structure that carries the king-pin connector 22 at the forward end of the trailer.

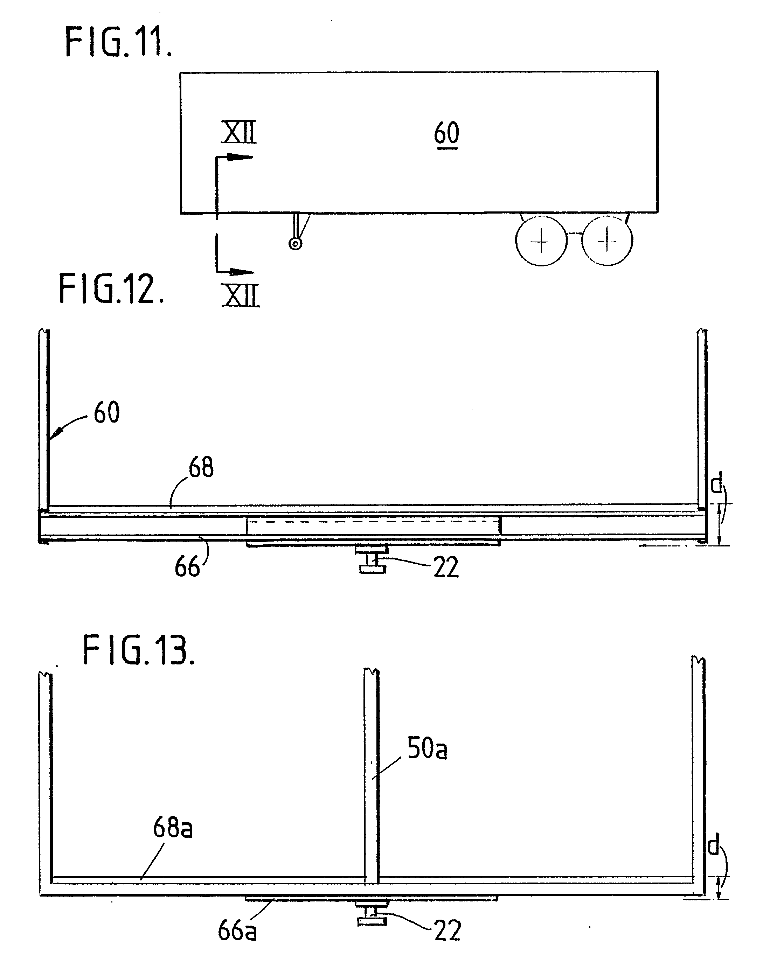

As previously mentioned, dry freight van-type trailers, as depicted in FIGURE 11, do not normally have a separate chassis since the closed box-like body 60 itself has sufficient strength and rigidity to transmit the loading direct to a cross-member carrying the usual king-pin connector 22 at the forward end. The conventional construction is seen in FIGURE 12 wherein 66 denotes the I-beam cross-member above which is the cargo-carrying floor or deck 68. In applying the invention, as indicated in FIGURE 13 a centrally disposed, rigid, upstanding plate-like spine member 50a is again provided, connected to the floor structure 68a and to an underlying horizontal plate member 66a carrying the king-pin connector 22 so as to stiffen the structure and thereby enabling the use of an I-section or other relatively deep section cross-member to be dispensed with. Again this enables a useful reduction in overall depth "d" and an increase of the interior height "h" to be obtained.

It will, however, be understood that many modifications can be made in the particular details and structural arrangements employed in carrying out the invention, and the scope of the invention is not to be construed as being limited by the illustrative examples or by the terms and expressions used herein merely in a descriptive or explanatory sense.

## Claims

1. A trailer of an articulated road transport heavy goods vehicle, said trailer having a cargo-carrying deck or floor (18;118;68a) and, at its forward end, a load-bearing structure (116;114;66a) which overlies and couples to complementary connecting means of the towing tractor unit (19) of the vehicle when the vehicle is in use, characterised in that the trailer is provided with one or more longitudinally-extending rigid spine members (50;50';50a) incorporated as an integral part of said load-bearing structure and projecting upwardly above the top of the cargo-carrying deck or floor (18;118;68a), such spine member or members (50;50';50a) being effective to stiffen said load-bearing structure thereby permitting the depth of that part of the load-bearing structure which lies below the level of the top of the cargo carrying deck or floor at the forward end of the trailer to be less than would otherwise be necessary to achieve a satisfactory level of load-bearing characteristics during use.

2. A trailer as claimed in Claim 1 wherein the spine member or members (50;50';50a) is or are positioned substantially midway across the width of the cargo-carrying deck or floor (18,118;68a), being confined to a relatively narrow central region thereof.

3. A trailer as claimed in Claim 2 wherein the width of said central region is no greater than about 50mm.

4. A trailer as claimed in any one of Claims 1 to 3 wherein the spine member or members (50;50';50a) is or are arranged symmetrically with respect to the median longitudinal axis of the trailer.

5. A trailer as claimed in any one of Claims 1 to 4, wherein the width of the cargo-carrying deck or floor and the width and position of the spine member or members (50;50';50a) is such that there remains sufficient unobstructed deck or floor space to accommodate a standard 1200mm pallet each side of the spine member or members.

6. A trailer as claimed in any of the preceding claims wherein the height of the spine member or members (50;50';50a) is less than 90cms.

7. A trailer as claimed in any of the preceding claims wherein the or each spine member (50;50';50a) extends rearwardly along the length of the trailer for a distance which is at least equal to the length of the forward part of the trailer that, in use, overlies part of the towing tractor unit (19) of the vehicle.

8. A trailer as claimed in any of the preceding claims wherein the cargo-carrying deck or floor (18;118) is supported from beneath by a chassis (12) that includes spaced-apart longitudinal main frame members (10), characterised in that said longitudinal main frame members terminate short of the forward part of the trailer which, in use, overlies part of the towing tractor unit (19) of the vehicle.

9. A trailer as claimed in any of the preceding claims further characterised in that it comprises an open-sided van-type body having an overhead roof frame structure supported above the cargo-carrying deck or floor (18).

10. A trailer as claimed in any of Claims 1 to 9, further characterised in that it comprises an insulated van-type body in which the cargo-carrying deck or floor (118) has a double-skin insulated structure.

FIG.1.

FIG.2.

FIG.3a.

FIG.3b.

FIG.3.

EP 0 385 776 A1

## FIG. 4.

## FIG. 5a.

## FIG. 5b.

EP 0 385 776 A1

FIG. 6.

FIG. 7.

FIG.8.

FIG.9.

FIG.10.

# FIG.11.

60

XII

XII

# FIG.12.

60

68

66

22

d

# FIG.13.

50a

68a

66a

22

d

| | **DOCUMENTS CONSIDERED TO BE RELEVANT** | | | EP 90302190.5 |
|---|---|---|---|---|
| Category | Citation of document with indication, where appropriate, of relevant passages | | Relevant to claim | CLASSIFICATION OF THE APPLICATION (Int. Cl⁵) |
| A | EP - A2/A3 - 0 217 075 (KRONE) * Fig. 1,2,3 * | | | B 62 D 53/06 |
| A | US - A - 4 362 317 (BROCKMAN) * Fig. 1,2 * | | | |

TECHNICAL FIELDS
SEARCHED (Int. Cl⁵)

B 62 D

The present search report has been drawn up for all claims

| Place of search | Date of completion of the search | Examiner |
|---|---|---|
| VIENNA | 11-05-1990 | PANGRATZ |

EPO Form 1503. 03.82